# EUROPEAN PATENT APPLICATION

(11) **EP 2 713 112 A2**
(43) Date of publication of application: **02.04.2014**
(21) Application number: 13425129.7
(22) Date of filing: 26.09.2013
(51) Int. Cl.: F24D 17/02, F24D 17/00

(54) **System for heating and cooling room air and producing sanitary hot water**

(30) Priority: 28.09.2012 IT RM20120162
(71) Applicant: Corsetti, Carlo, 00169 Roma (IT)
(72) Inventor: Corsetti, Carlo, 00169 Roma (IT)

(57) **Abstract**

A system for heating and cooling room air and producing sanitary hot water, comprises a solar collector (1) provided with a tube bundle (5) of the high pipe type, and a main tank (2) for hot water connected to the water mains, a heat pump (4) interacting with the solar collector (1), additional heat sources in the form of electric water heaters, fan coil units for heating or cooling the room air, and control means responsive to sensors to actuate valves and circulation pumps. The heat pump (4) is connected to an isolated heat exchanger (27) for accumulation of hot water co-operating with the main tank (2) for producing hot water and adjusting the water temperature in the circuit of the fan coil units.

## Description

The present invention relates to a system for heating and cooling room air and producing sanitary hot water.

For this purpose, the system includes, among other things, a solar collector or solar thermal panel, at least one tank for the hot water, a heat pump, additional heat sources in the form of conventional electric water heaters, ventilation apparatuses for heating or cooling air of the indoor environment, and control means responsive to sensors to actuate valves and circulation pumps.

The components listed above are present in many documents of the state of art. By way of example, a system being described in the patent US-4,111,259 that is granted to Lebduska on September 5, 1978, is mentioned here. In this system, a solar collector is inserted in a loop circuit comprising, in addition to a reservoir for hot water and a circulation pump, a heat exchanger for the production of sanitary hot water, which is associated to an electric water heater, if necessary. The system of the cited patent also includes a heat pump having traditionally a cold side heat exchanger and a hot side heat exchanger. In winter operation the cold side heat exchanger of the heat pump exchanges energy with the hot water of the tank, which is heated by the solar collector and, in the absence of solar irradiation, by means of the heat exchanger for the production of sanitary hot water; the hot side heat exchanger is connected to ventilation apparatuses or fan coil units for the supply of hot air to the indoor environment. In summer operation the hot side heat exchanger of the heat pump is connected to fan coil units for the expulsion of the heat to the outside; the cold side heat exchanger of the heat pump is connected to fan coil units for the supply of cold air to the indoor environment.

The system according to the above-mentioned patent may work well for the air conditioning. However, it is believed that the system can be improved in many aspects related to the production of sanitary hot water.

In this context, the technical task underlying the present invention is to propose a system for heating and cooling room air and producing sanitary hot water that overcomes the drawbacks of the known art.

In particular, an object of the present invention is to allow a wide and rapid production of sanitary hot water, which is diversified depending on needs and climatic conditions, in a system comprising a heat pump and a solar collector, in particular for both a cold start and after an accidental and unexpected emptying of the accumulation tank.

Depending from this, another object of the invention is to create an interaction between different accumulation tanks in supplying sanitary hot water.

Yet another object of the present invention is to optimize the interaction between a heat pump and a solar collector or solar thermal panel.

The mentioned technical task and the specified objects are substantially achieved by a system for heating and cooling room air and producing sanitary hot water, comprising the technical features exposed in one or more of the appended claims. Further features and advantages of the present invention will become more apparent from the indicative, and therefore non-limiting, description of a preferred but not exclusive embodiment of a system for heating and cooling room air and producing sanitary hot water, as illustrated in the accompanying drawings in which:
- Figure 1 is a schematic side view of the system of the present invention;
- Figure 2 is a schematic front view of the system in Figure 1;
- Figure 3 is a schematic circuit representation of the system according to the present invention.

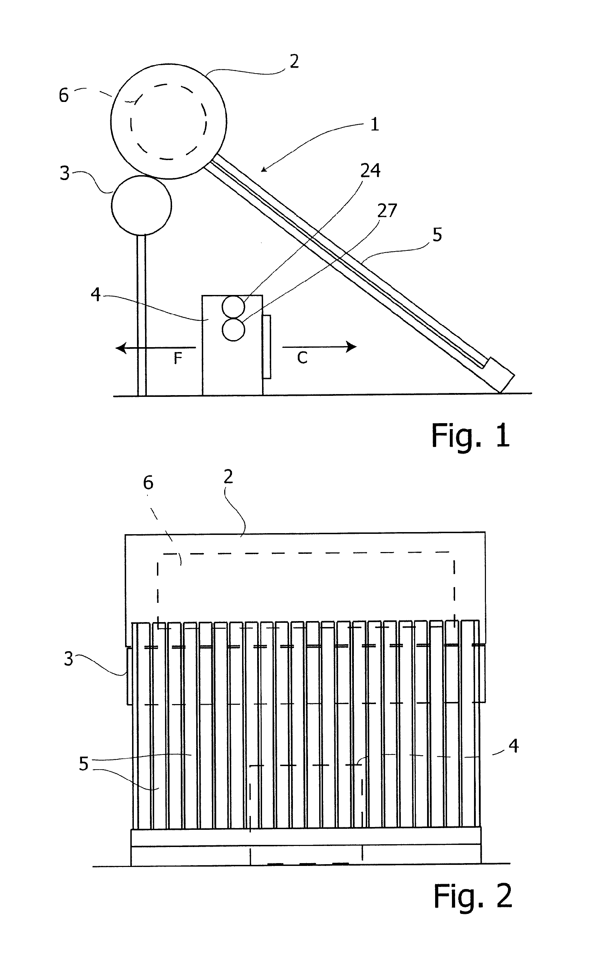

Reference is initially made to Figures 1 and 2, which, as mentioned above, represent schematically a side view and, respectively, a front view of the system of the present invention. Indicated as 1 in Figures 1 and 2 is a high pipe type solar collector or solar thermal panel having a tube bundle disposed in an inclined position. Disposed at the top of the solar collector 1 is a main tank indicated as 2 for the heated water, below which there is a reserve tank 3 that is separated from the main tank 2. Indicated as 4 is a heat pump which, advantageously according to the present invention, is located below the tube bundle 5 of the solar collector 1. The solar collector 1 is suitably located to receive the best solar irradiation, for example on a roof or on a terrace. In this way the tube bundle 5 is heated by the sun but also by the hot side of the heat pump 4 which sends the hot air produced towards them according to the arrow C, and the cold air produced by the cold side of the heat pump 4 is sent towards the external environment according to the arrow F. As will be seen better later on, the heat pump 4 comprises an isolated heat exchanger 24 for heating and cooling room air, and an isolated heat exchanger 27 with mini accumulation for sanitary hot water.

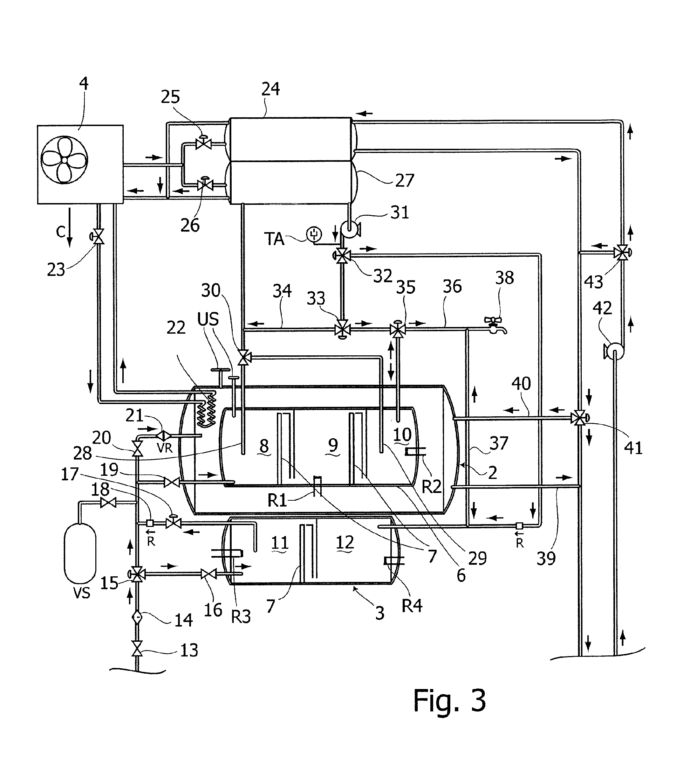

Referring to Figure 3 which is a schematic circuit representation of the system according to the present invention, the same components of Figures 1 and 2 are denoted with the same reference numerals.

More specifically, the main tank 2, shown in a longitudinal cross-section in Figure 3, has a separate inner tank 6 that is in turn divided into three zones with isolated labyrinth separation septa, generically indicated as 7, said zones being heated by resistors R1 and R2, if any. The zones are indicated as 8, 9, and 10, from left hand to right hand (in Figure 3) and are affected by temperature gradients. In a particularly advantageous modification the zone 10 is isolated from the rest of the inner tank 6 and the main tank 2 in order to obtain a rapid and economic function by heating only one third of the accumulated water. Further the reserve tank 3, below the main tank 2, has a labyrinth separation septum 7 that is placed in a central position to divide the reserve tank 3 into two parts 11, 12, which are possibly heated by resistors R3 and R4. The main tank 2 and the reserve tank 3 are supplied from the water mains through an isolation tap 13, a filter 14 and a motorized three-way valve 15, and have outputs generically indicated as US. At the inlet to the reservoir tank 3 there is also an isolation valve 16, and at the output there are a motorized valve 17 and a check valve R 18. At the inlet to the main tank 2 there are an isolation tap19 to the inner tank 6, in particular in its coldest zone 8, and an isolation tap 20 to the outer part of the main tank 2 via a pressure switch valve VR 21 for replenishing water. An expansion vessel VS is connected to the inlet branch of the water from the mains through a tap. Inserted in the same external zone of the main tank is a heat exchanger 22 of the heat pump 4 with inlet gas after operation of a motorized valve 23.

On the other hand, the heat pump 4 is conventionally connected to the conditioning system for the entry of hot or cold air in the room. This system, which is provided with fan coil units not shown, is shown schematically in the above isolated heat exchanger 24 for heating and cooling via a motorized valve 25. Furthermore, according to the invention, the heat pump 4 is connected via a solenoid valve 26 with the aforementioned isolated heat exchanger 27 having a mini accumulation for sanitary hot water.

The isolated heat exchanger 27 is connected to the zone 8 of the inner tank 6 through a suction pipe 28 in the zone 8. This connection is mixed with warmer water from the zone 10 of the inner tank 6 through a suction pipe 29 and a three-way mixing valve 30. The isolated heat exchanger 27 is also connected via a circulation pump 31 and a three-way motorized valve 32 to the reserve tank 3 by a check valve R, and through a three-way motorized valve 33, to the recirculation via a branch 34 or through a three-way motorized valve 35, to the inner tank 6 in the zone 10 thereof. There is a thermostat TA. Downstream of motorized three-way valve 35 a branch 36, in communication via a tract 37 to the reserve tank 3 leads to a sanitary utilization 38. The tract 37, by putting in communication the main tank 2 with the reserve tank 3, allows the recovery of hot water in overtemperature through the transfer of the same from the first tank to the second one.

It should be stressed that the main tank 2 is also connected to the room air conditioning system through the branches 39 and 40 by means of a three-way motorized valve 41. Two ways branches of conditioning system, which are fed by a circulation pump 42, are connected together by a three-way motorized valve 43. Thanks to this circuit arrangement, in the room air conditioning system, the room air heating is performed by means of solar energy.

Although not described, it should be understood that the system is provided with an electrical circuit that actuates all the electrical components of the system, such as the heat pump, the resistors, the circulation pumps, the fan coil units, the motorized valves, the control means, on the basis of sensors not described in detail.

The operation of the system according to the invention is summarized in the following.

In winter operation, only for the production of sanitary hot water, the solenoid valve 25 is closed, as well as the three-way motorized valve 41, and the solenoid valve 26 is open with the isolated heat exchanger 27.

For the only room air heating, the solenoid valve 26 is closed, as well as the three-way motorized valve 41, and the solenoid valve 25 is open on the air conditioning system.

For heating and producing hot water in normal conditions, the solenoid valve 25 is open, as well as the three-way motorized valve 41, and the solenoid valve 26 is closed with the isolated heat exchanger 27.

For heating and producing sanitary hot water with a request of increasing the air temperature in the rooms, the solenoid valves 25 and 26 are open, and the three-way motorized valve 41 is open in truly exceptional conditions.

In the event of a cold start, the immediate contribution is provided by the heat pump 4, together with the circulation pump 31 and the mini accumulation of the isolated heat exchanger 27. There is a rapid recirculation, and the three-way motorized valve 33 decides on the temperature of the recirculating water, and the motorized valve 35 blends directly at the tap 38 of a sanitary apparatus: the suction tubes 28 and 29, from the periphery of the main tank 2 and the inner tank 6, respectively, permit a mixing adjusted to ensure hot water immediately at the desired temperature.

In normal operating conditions, one can use hot water in accumulation heated by the sun, which can be elevated in temperature by the heat pump when desired.

In summer operation, in case of conditioning only, the solenoid valve 25 is open on the conditioning system, and both the solenoid valve 26 and the three-way motorized valve 41 are closed.

In case of conditioning and simultaneous production of sanitary hot water, the solenoid valve 25 is open, and the solenoid valve 26 on the heat exchanger of the isolated tank 27 is closed. On the contrary the solenoid valve 23 is open, and the heat pump 4 works with only one compressor. Then, space is retrieved in boiler rooms. When the water in the main tank 2 is at temperature (50 - 55°C), the solenoid valve 23 is closed and the heat pump 4 emits hot air into the U-shaped tube bundle 5 of the solar collector 1 and / or expands the accumulation by the circulation pump 31, through the motorized valve 32, in the reserve tank 3. When the temperature in the main tank 2 is very high (80°C) due to the solar irradiation, heat is recovered by operating the circulation pump 31, the three-way motorized valve 32, the motorized valve 17 and the suction pipe 29 by transferring hot water from the main tank 2 to the reserve tank 3.

Eventually, it is understood that a feature of the system according to the present invention mainly consists in the presence of several tanks for optimization of the use of produced hot water, especially sanitary hot water. This is assured by the connection within the main tank 2 and between the main tank 2 and the reserve tanks 3 and the isolated heat exchanger 27. Another important feature is the particular location of the heat pump 4 below the tube bundle 5. It allows to use the heat from the hot side of the heat pump 4, which so far has been discharged uselessly into the environment, in order to further heat the tube bundle 5. This is particularly useful when the solar irradiation is not high.

It should be kept in mind that the effects obtained are achieved by a heat pump provided with a single compressor and without the use of boilers or fireplaces, geothermal energy or other, even if these may still be used as an option . Furthermore, the advantages are obtained in an environmentally friendly manner, with low costs, especially with economy of operation and maintenance, quickly and in small spaces: Still, the system according to the invention is characterized by its adaptability to more or less forced operations. The heat pump 4 and the zone 10 of the inner tank 6 are employed for an economical operation, the heat pump 4 and all the inner tank 6 for a normal operation, the heat pump 4 and all the inner tank 6 with the addition of the resistor R2 in the zone 10 for a super operation, and finally the heat pump 4, all the inner tank 6 with the addition of the resistor R2 in the zone 10 and the resistor R1 in the zone 9 of the tank 6 for a turbo operation.

Furthermore, a valid control on the operation of the system is provided by the three-way motorized valve 15 that controls the temperature difference of the main tanks 2 and the reserve tank 3 and decides where the sanitary hot water 38 is drawn from. This is useful especially in summer when the over irradiation transfers the sanitary hot water from the main tank 2 to the reserve tank 3, and all the sanitary hot water is taken from the main tank 2.

## Claims

1. A system for heating and cooling room air and producing sanitary hot water, comprising a solar collector (1) provided with a tube bundle (5) and a main tank (2) for hot water connected to the water mains and including an inner tank (6) in turn divided into three zones (8, 9, 10), a heat pump (4) interacting with the solar collector (1), additional heat sources in the form of electric water heaters, fan coil units for heating or cooling the room air, and control means responsive to sensors to actuate valves and circulation pumps, **characterized in that** the heat pump (4) is connected to an isolated heat exchanger (27) for a mini accumulation of hot water co-operating with the main tank (2) for producing hot water and adjusting the water temperature in the circuit of the fan coil units.

2. The system according to claim 1, wherein said isolated heat exchanger (27) is connected to a thermostat (TA) running with a circulation pump (31) and being connected by means of a motorized valve (33) on one hand to a recirculating branch (34), having a suction element (28) in the zone (8) of the inner tank (6) through a mixing valve (30) and, on the other hand, to a motorized valve (35) having a suction element (29) in the zone (10) of the inner tank (6), to quickly get hot sanitary water through the heat pump (4).

3. The system according to claim 1, wherein said main tank (2) and the isolated heat exchanger (27) are connected to a reserve tank (3) that is in turn connected to the water mains.

4. The system according to claim 1, wherein said heat pump (4) is located below the solar collector (1) so that the hot side of the heat pump (4) faces said tube bundle (5).

5. The system according to claim 1, wherein said system is connected to the main tank (2) by means of a circulation pump (42) and three-way motorized valves (41, 43) for heating room air by solar energy.
